# EUROPÄISCHE PATENTSCHRIFT

(11) **EP 1 602 545 B1**
(45) Veröffentlichungstag und Bekanntmachung des Hinweises auf die Patenterteilung: **14.05.2008**
(21) Anmeldenummer: 05011292.9
(22) Anmeldetag: 25.05.2005
(51) Int. Cl.: B60T 17/00, B01D 53/26

(54) **Druckluftaufbereitungseinrichtung für Kraftfahrzeug-Druckluftanlagen**
Compressed air processing device for vehicle air system
Dispositif de traitement du air pour une installation à air comprimé de véhicle

(30) Priorität: 01.06.2004 DE 102004026624
(43) Veröffentlichungstag der Anmeldung: 07.12.2005
(73) Patentinhaber: Haldex Brake Products GmbH, 69123 Heidelberg (DE)
(72) Erfinder: Nöcker, Joachim, 69412 Eberbach (DE)
(74) Vertreter: Rehberg Hüppe + Partner

(56) Entgegenhaltungen:
- WO-A-93/05867
- WO-A-94/07726
- WO-A-02/096732
- DE-A1- 10 038 266

## Beschreibung

Die Erfindung betrifft ein Verfahren zum Steuern einer Druckluftaufbereitungseinrichtung für Kraftfahrzeug-Druckluftanlagen, mit einem Motor, einem Kompressor, einer Steuerelektronik, einem Lufttrockner, einem Druckregler mit Auslassventil zur Steuerung des Kompressors zwischen einer Leerlaufphase und einer Lastlaufphase, einem Mehrkreisschutzventil mit Überströmventilen für die einzelnen Kreise, und einem Regenerationsventil, indem die während der Lastlaufphase geförderte Luftmenge mit der Steuerelektronik ermittelt und eine dazu proportionale Regenerationsluftmenge festgelegt und die Regeneration mit der festgelegten Regenerationsluftmenge durchgeführt wird, wobei bei Überschreiten eines festgelegten Grenzwertes eine Warneinrichtung aktiviert wird.

### STAND DER TECHNIK

Aus der EP 0 093 253 B2 ist eine Steuereinrichtung zum Regenerieren eines Lufttrockners für eine pneumatische Anlage, insbesondere eine Fahrzeugbremsanlage, bekannt. Es ist ein Motor vorgesehen, der mit einem Drehzahlsensor ausgestattet ist. Über den Motor wird ein Kompressor angetrieben. Das Ausgangssignal des Drehzahlsensors wird einer Steuerelektronik zugeleitet. Aus dem Ausgangssignal des Drehzahlsensors kann unter Berücksichtigung der Anzahl der Kolbenhübe des Kompressors und des Volumens eines Kolbenhubs die vom Kompressor geförderte Luftmenge berechnet werden. Es ist ein Druckregler vorgesehen, der mit einem Druckschalter ausgestattet ist. Das von dem Druckschalter abgegebene Signal wird der Steuerelektronik zugeführt und lässt die Unterscheidung in eine Lastlaufphase bzw. eine Leerlaufphase zu. Insoweit kann das Fördervolumen ermittelt werden, das während einer Lastlaufphase in den Vorratsbehälter gefördert wird. Die einzelnen durch die Kolbenhübe des Kompressors bewegten Fördervolunima werden im Steuergerät aufaddiert. Es wird in die Steuerelektronik ein Grenzwert einer maximalen Luftmenge entsprechend einer maximalen Hubzahl des Kompressors eingegeben. Wenn eine Lastlaufphase eintritt, bei der dieser Grenzwert überschritten wird, wird eine Warneinrichtung in Form eines Signalgebers aktiviert. Es ist ein Temperatursensor vorgesehen, um den Einfluss der Temperatur berücksichtigen zu können. An eine Lastlaufphase schließt sich, wie üblich, eine Leerlaufphase an. Jede Leerlaufphase ist mit einer Regenerationsphase verbunden. Die Dauer der Regenerationsphase richtet sich nach der geförderten Luftmenge während der Lastlaufphase. Es wird eine zur während der Lastlaufphase geförderten Luftmenge proportionale Regenerationsluftmenge festgelegt und während der Regenerationsphase abgearbeitet, bis ein Speicher in der Steuerelektronik wieder auf Null erniedrigt wird. Mit dem Erreichen dieses Zustands wird auch die Warneinrichtung wieder deaktiviert. Man geht davon aus, dass damit eine vollständige Regenerierung des Lufttrockners stattgefunden hat.

Diese bekannte Anlage und das damit verbundene Verfahren berücksichtigen keinerlei Änderungen der Bedingungen über die Lebensdauer einer solchen Druckluftaufbereitungseinrichtung. Beispielsweise unterliegt der als Druckluftquelle dienende Kompressor einem erheblichen Verschleiß über seine Lebensdauer, zumal er relativ hohe Drücke erzeugen und verarbeiten muss. Dieser Verschleiß kann ohne weiteres dazu führen, dass sich die pro Kolbenhub des Kompressors geförderte Luftmenge erheblich verändert. Dies führt dazu, dass die bei entsprechendem Verschleiß des Kompressors geförderte Luftmenge kleiner, zuweilen sogar erheblich kleiner ist, als es den Kenndaten des Kompressors im Neuzustand entspricht. So wie sich über die Lebensdauer eines Kompressors einer solchen Druckluftaufbereitungsanlage die Bedingungen verändern können, können auch Veränderungen der Bedingungen während der Regenerationsphase stattfinden. Auch das die Regenerationsphase steuernde Magnetventil, welches das Rückschlagventil vor der Zentralbelüftung überbrückt, kann einem Verschleiß unterliegen. Hierdurch können sich die Öffnungsquerschnitte und die Widerstände in der Regenerationsleitung über die Lebensdauer der Anlage verändern, wodurch die Überwachung der Regenerationsluftmenge ungenau wird und das eingestellte Verhältnis in der Proportionalität zwischen der Regenerationsluftmenge und der während der Lastlaufphase geförderten Luftmenge nicht mehr stimmt. Man kann also nicht davon ausgehen, dass trotz Messungen der Luftmengen eine ordnungsgemäße Regeneration abläuft. Damit ist auch die Aktivierung der Warneinrichtung nicht mehr repräsentativ für einen nicht ordnungsgemäßen Zustand. Die Anzeige der Warneinrichtung erlaubt keine Aussage darüber, ob die Kartusche des Lufttrockners ordnungsgemäß regeneriert wurde oder ob ein Dauerzustand eintritt, bei dem sich im Vorratsbehälter Wasser befindet.

Aus der gattungsgemäßen DE 34 45 699 A1 ist eine Lufttrocknungseinrichtung für Druckluftanlagen bekannt. Auch diese Einrichtung besitzt einen Kompressor, der von einem Druckregler in Verbindung mit einem Auslassventil zwischen einer Lastlaufphase und einer Leerlaufphase hin- und hergeschaltet wird, wie es die Bereitstellung und der Verbrauch von Druckluft in den einzelnen Kreisen erforderlich macht. Die Druckluftaufbereitungseinrichtung zeigt nur einen Kreis mit einem Vorratsbehälter. Die Druckluftaufbereitungseinrichtung weist auch einen Lufttrockner auf, mit dessen Hilfe die vom Kompressor geförderte Druckluft getrocknet und dem einzigen Kreis zugeleitet wird. Der Lufttrockner ist mit einem Trocknungsmittel gefüllt, welches regeneriert werden muss. Zu diesem Zweck ist ein Regenerationsventil vorgesehen, welches das Rückschlagventil in der Zentralbelüftung zu dem einzigen Kreis überbrückt und so die Möglichkeit schafft, Regenerationsluft aus dem Behälter rückwärts durch den Lufttrockner und dann über das Auslassventil in die Atmosphäre zu führen, um auf diese Weise Feuchtigkeit von dem Trocknungsmittel im Lufttrockner mitzunehmen und diesen zu regenerieren. Weiterhin ist eine Steuerelektronik vorgesehen, die verschiedene elektrische Signale verarbeitet und ansteuert, so dass eine entsprechende Arbeitsweise erreicht wird. Dabei wird das Ausgangssignal eines Druckwächters sowie das Signal eines Feuchtesensors der Steuerelektronik zugeführt. Der Feuchtesensor ist nach dem Rückschlagventil in der zu dem Vorratsbehälter führenden Leitung angeordnet. Die Steuerelektronik steuert das Regenerationsventil wie auch eine Warneinrichtung in Form einer Leuchte. Die Regenerationsphase wird zeitabhängig festgelegt. Der Feuchtesensor dient zum Erfassen der Feuchtigkeit der Luft in der Versorgungsleitung nach dem Rückschlagventil zu dem Vorratsbehälter. Die Steuerelektronik beinhaltet einen Zähler, der registriert, wenn bei Beendigung der Lastlaufphase und zu Beginn der Leerlaufphase des Kompressors mehrmals hintereinander ein Schwellwert der Luftfeuchtigkeit in der Versorgungsleitung überschritten wurde. Es wird dann die Warneinrichtung aktiviert und ein Warnsignal abgegeben, welches somit anzeigt, dass das Trocknungsmittel im Lufttrockner verbraucht ist und ausgetauscht werden muss. Der Schwellwert lässt sich durch die Festlegung der Anzahl der aufeinanderfolgenden Leerlaufphasen mit Regenerieren des Trocknungsmittels einstellen. Das Warnsignal wird also dann abgegeben, wenn oft hintereinander Regenerationsphasen ablaufen. Bei lang andauernden Lastlaufphasen, beispielsweise infolge erhöhten Luftverbrauchs oder des Eintritts eines Lecks in einen nachgeschalteten Teil der Anlage, ertönt kein Warnsignal, weil in einem solchen Falle auch die Regeneration unterdrückt wird bzw. selten abläuft. Trotzdem kann in einem solchen Fall durchaus ein Defekt in der Anlage vorliegen. Das Verfahren, mit dem die Anlage betrieben wird, berücksichtigt nicht Änderungen in der Anlage, die über die Betriebszeit der Anlage auftreten. So ist die Anzeige über die Warneinrichtung nur bedingt repräsentativ für das Vorliegen eines Fehlers in der Anlage.

Die EP 0 808 756 B1 zeigt eine Druckluftaufbereitungseinrichtung für Kraftfahrzeug-Druckluftanlagen mit einem Kompressor, einem Luftregler, einem Druckregler zur Steuerung des Kompressors zwischen einer Leerlaufphase und einer Lastlaufphase, einem Mehrkreisschutzventil mit Überströmventilen für die einzelnen Kreise sowie einem Regenerationsventil, welches das Rückschlagventil in der Versorgungsleitung überbrückt. Es ist eine Steuerelektronik vorgesehen, die den Druckregler sowie das Regenerationsventil steuert. Mit einer Messeinrichtung wird das vom Kompressor durch den Lufttrockner hindurchgeförderte Luftvolumen ermittelt. Der Zeitpunkt des Regenerierens wird aus dem ermittelten Luftvolumen bestimmt, ebenso das Volumen der zum Regenerieren benötigten Regenerationsluft. Die Regenerationsluft wird, wie bei allen derartigen Anlagen, in Gegenstromrichtung durch den Lufttrockner geleitet. Auch dieses Luftvolumen wird ermittelt und das Regenerationsventil wieder deaktiviert, wenn das von der elektronischen Steuerung festgelegte Regenerationsluftvolumen durch den Lufttrockner geflossen ist. Die Druckluftaufbereitungseinrichtung besitzt keine Warneinrichtung, so dass z. B. bei einem erhöhten Druckluftverbrauch infolge eines aufgetretenen Lecks das geförderte Luftvolumen ansteigt, sich also die Lastlaufphase verlängert und demzufolge auch die Regenerationsphase verlängert wird. Diese beiden Forderungen lassen sich gleichzeitig nicht erfüllen, so dass gefährliche Betriebszustände eintreten können.

### AUFGABE DER ERFINDUNG

Der Erfindung liegt die Aufgabe zugrunde, ein Verfahren zum Steuern einer Druckluftaufbereitungseinrichtung mit Motor, Kompressor, Steuerelektronik, Druckregler, Lufttrockner, Mehrkreisschutzventil, Zentralbelüftung und Rückschlagventil aufzuzeigen, bei dem mit verbesserter Sicherheit eine nicht-ordnungsgemäße Regeneration erkannt werden kann. Es sollen auch Fehler in der Anlage angezeigt werden, die in einem Verschleiß des Kompressors und einer dadurch bewirkten Änderung der geförderten Luftmenge ihre Ursache haben.

### LÖSUNG

Die Aufgabe der Erfindung wird erfindungsgemäß durch ein Verfahren zum Steuern einer Druckluftaufbereitungseinrichtung für Kraftfahrzeug-Druckluftanlagen mit den Merkmalen des unabhängigen Patentanspruchs 1 gelöst.

### BESCHREIBUNG DER ERFINDUNG

Das neue Verfahren zum Steuern einer Druckluftaufbereitungseinrichtung sieht vor, den Druckverlauf in der Zentralbelüftung nach dem Rückschlagventil oder jedenfalls im Vorratsbehälter der Betriebsbremse während der Lastlaufphase und/oder während der Regenerationsphase zu überwachen. Dieser Überwachungsvorgang wird mindestens einmal im Neuzustand der Druckluftbeschaffungseinrichtung durchgeführt, also zu einem Zeitpunkt, zu dem der neue Kompressor noch keine Verschleißerscheinungen zeigt, so dass sich die geförderte Luftmenge während der Lastlaufphase und/oder während der Regenerationsphase anhand der bekannten Kenndaten des Kompressors relativ genau feststellen lässt. Der Druckverlauf nach dem Rückschlagventil, der pro Zeiteinheit eintritt, wird mit Hilfe der Steuerelektronik ermittelt, festgestellt und durch Abspeicherung festgehalten. All diese Vorgänge werden dann in mehr oder weniger regelmäßigen Zeitabständen über die Lebensdauer der Druckluftaufbereitungseinrichtung wiederholt, wobei z. B. der Verschleiß am Kompressor fortschreitet. Bei fortschreitendem Verschleiß im Kompressor wird die während der Lastlaufphase geförderte Luftmenge entsprechend kleiner werden, was allerdings unter Berücksichtigung der Signale des Drehzahlsensors allein nicht feststellbar ist. Ein Maß für den fortschreitenden Verschleiß ist vielmehr der pro Zeiteinheit verringerte Druckanstieg im Vorratsbehälter der Betriebsbremse. Diese beiden Druckdifferenzen werden mit Hilfe der Steuerelektronik in das Verhältnis gesetzt. Der Abfall der Druckdifferenz pro Zeiteinheit ist ein Maß für den Verschleiß am Kompressor und damit auch ein Maß für die pro Zeiteinheit bzw. Umdrehung geringere Luftmenge während der Lastlaufphase. Die Ermittlung der während der Lastlaufphase geförderten Luftmenge wird dann mit dem vorher gebildeten Verhältnis korrigiert, so dass die Messung der geförderten Luftmenge genauer den tatsächlichen Verhältnissen entspricht. Die Festlegung der Regenerationsluftmenge, also der Luftmenge, die für die Regeneration vorgesehen ist, wird proportional zu der jeweils gemessenen und während der Lastlaufphase geförderten Luftmenge durch Zeitspannen festgelegt. Insoweit wird auch die Festlegung der Regenerationsluftmenge genauer. Hierdurch stellt sich eine größere Betriebssicherheit ein, so dass mit erhöhter Sicherheit davon ausgegangen werden kann, dass trotz Auftreten von Verschleiß am Kompressor eine ordnungsgemäße Regeneration stattfindet. Entsprechendes gilt entsprechend auch für die Regenerationsphase. Wenn sich die Bedingungen während der Regeneration im Laufe der Lebensdauer der Anlage verändern, beispielsweise die Durchlassquerschnitte kleiner oder größer werden, dann steigt auch hier durch die Überwachung der Regenerationsluftmenge während der Regenerationsphase die Genauigkeit. Die Erfindung kann also sowohl während der Lastlaufphase wie auch während der Regenerationsphase Anwendung finden.

Beim Steuern einer Druckluftaufbereitungseinrichtung mit den in Rede stehenden Elementen können sich verschiedene Fehlfunktionen ergeben, die sich letztlich negativ auf eine ordnungsgemäße Regeneration auswirken. So kann ein durch eingetretene Leckagen verursachter hoher Luftverbrauch der Kraftfahrzeugdruckluftanlage dazu führen, dass der Abschaltdruck des Druckreglers der Druckluftaufbereitungseinrichtung nicht erreicht wird. In diesem Falle unterbleibt eine Regeneration, da die Lastlaufphase nicht beendet wird. Diese gefährliche Situation wird durch die Aktivierung der Warneinrichtung angezeigt.

Andererseits kann es möglich sein, dass der Abschaltdruck des Druckreglers erreicht wird, so dass die übliche Umschaltung in die Leerlaufphase nachfolgt. Wenn auch hier Leckagen in der Kraftfahrzeugdruckluftanlage gegeben sind, kann ein Zustand eintreten, bei dem der Einschaltdruck des Druckreglers erreicht wird, bevor die ordnungsgemäße Regeneration abgeschlossen worden ist. Auch dies wird dazu führen, dass eine ordnungsgemäße Regeneration nicht mehr möglich ist. Zwar arbeitet das Steuerverfahren so, dass sich die zur Regeneration erforderliche Luftmenge fortlaufend erhöht, also ein rechnerisch größerer Wert verlangt wird. Die Druckluftaufbereitungseinrichtung kann jedoch eine ordnungsgemäße Regeneration nicht mehr durchführen, weil der Einschaltdruck des Druckreglers vor Ablauf der notwendigen Regenerationsphase erreicht wird. Auch hierbei wird die Warneinrichtung aktiviert, um den Fehler anzuzeigen.

Schließlich kann die Regeneration auch durch einen verringerten Wirkungsgrad des Kompressors beeinträchtigt werden, wie er sich mit fortschreitender Betriebszeit einstellt.

In all diesen Fällen wird ein Grenzvolumen eingestellt. Bei Unterschreiten des Grenzvolumens geht man von einer ordnungsgemäßen hinreichenden Regeneration aus. Bei Überschreiten des Grenzvolumens wird über die Steuerelektronik die Warneinrichtung aktiviert.

Um den Verschleiß des Kompressors der Luftaufbereitungseinrichtung zu berücksichtigen, wird der Kompressor in entsprechenden zeitlichen Abständen hinsichtlich seines Wirkungsgrades überwacht. Entspricht die von dem Kompressor abgegebene Luftmenge je Umdrehung nicht mehr dem ursprünglichen Wert, so muss die tatsächlich abgegebene Luftmenge ermittelt werden, um den Einfluss des Verschleißes auszugleichen und auch die jeweils zugeordnete Regenerationsluftmenge zu erniedrigen. Hierzu wird der Druckverlauf in der Zentralbelüftung während der Lastlaufphase und/oder während der Regenerationsphase überwacht und die jeweilige Druckdifferenz pro Zeiteinheit abgespeichert. Das Verhältnis der Druckdifferenzen zweier miteinander in Vergleich stehender Zeitpunkte ist ein Maß für den Wirkungsgrad des Kompressors und damit für den eingetretenen Verschleiß. Der Wirkungsgrad des Kompressors kann jedoch nur bei gleichen Randbedingungen ermittelt werden. So sollte bei den zeitlich auseinander liegenden Messungen immer von einem gleichen Startdruck ausgegangen werden. Es sollte eine Erstbefüllungssequenz genutzt werden. Die jeweilige Messung sollte im Ruhezustand des Fahrzeugs (Geschwindigkeit = 0) durchgeführt werden und ohne gleichzeitigen Luftverbrauch im Bereich der Betriebsbremse und der Handbremse. Schließlich sollte auch eine Kupplungsbetätigung während der Messung unterbleiben. All diese Zustände können durch entsprechende Signale festgestellt werden, so dass die jeweilige Messung nur dann durchgeführt werden kann, wenn diese gleichen Randbedingungen kumulativ gegeben sind. Der Wirkungsgrad des Kompressors wird also nach einer bestimmten Wegstrecke des Fahrzeugs ermittelt und mit dem Neuzustand verglichen. Bei Überschreiten einer einstellbaren Abweichung der Wirkungsgrade wird die Warneinrichtung aktiviert. Außerdem erfolgt eine Anpassung der Regeneration.

Der Druckverlauf (Druckabfall) während der Regenerationsphase kann ebenso überwacht werden. Auch dies geschieht im Stillstand des Fahrzeugs und ohne Luftverbrauch in der Kraftfahrzeugdruckluftanlage. Der Druckabfall pro Zeiteinheit wird mit dem Druckabfall pro Zeiteinheit verglichen, der im Neuzustand des Fahrzeugs vorlag. Unterschreitet der ermittelte Wert einen einstellbaren Grenzwert, wird die Warneinrichtung aktiviert. Die Aktivierung der Warneinrichtung kann und sollte auch dann erfolgen, wenn ein elektrischer Fehler in der Anlage und/oder im Regenerationsventil vorliegt.

Der Druckverlauf in der Zentralbelüftung nach dem Rückschlagventil oder im Vorratsbehälter der Betriebsbremse wird ausgehend von einem festgelegten Anfangsdruck überwacht. Durch einen solchen festgelegten Anfangsdruck werden gleiche Ausgangsverhältnisse für die Überwachung und Messung festgelegt. Dies gilt sowohl für die Lastlaufphase wie auch die Regenerationsphase. Es hat sich als sinnvoll erwiesen, während der Lastlaufphase einen Anfangsdruck von etwa 5 bar zugrunde zu legen, während in der Regenerationsphase ein Anfangsdruck von etwa 12 bar sinnvoll ist. Druckänderungen in der Größenordnung von 1 bar oder, anders gesagt, Anwendung von Messdauern in der Größenordnung von 30 Sekunden bis etwa 1 Minute erscheinen durchaus ausreichend und repräsentativ.

Die Überwachung des Druckverlaufs in der Zentralbelüftung im Neuzustand der Druckluftbeschaffungseinrichtung wie auch die wiederholte Überwachung und Messung sollten in einem Zustand ablaufen, in welchem eine bevorzugte Befüllung der Betriebsbremskreise stattfindet. Dies bedeutet, dass die vom Kompressor geförderte Luftmenge ausschließlich in die beiden Vorratsbehälter der Betriebsbremse gelangt, während die Überströmventile für den dritten und die folgenden Kreise geschlossen gehalten werden. Damit ist zugleich der Einfluss eines Anhängers ausgeschaltet, d. h. es spielt für die Messung keine Rolle, ob ein Anhänger an das Zugfahrzeug angekoppelt ist oder nicht. Die Messung sollte jedoch bei eingelegter Handbremse auf dem Zugfahrzeug durchgeführt werden. Ebenso sollte der Druckverlauf während des Stillstandes des Fahrzeuges durchgeführt werden und zu Zeiten, in denen kein Luftverbrauch auf dem Fahrzeug stattfindet. Solche Luftverbräuche würden nämlich die Messung der Luftmenge und den Verlauf des Druckanstieges nach dem Rückschlagventil verfälschen.

Als Grenzwert für die Aktivierung der Warneinrichtung kann ein Grenzwert des Verhältnisses der Druckverläufe während der Lastlaufphase festgelegt werden. Wenn beispielsweise die Druckdifferenz der beiden im Behälter auftretenden Drücke zu einem späteren Zeitpunkt während der Lebensdauer der Druckluftaufbereitungseinrichtung im Vergleich zum Neuzustand auf etwa 70 % gesunken ist, kann dies als Schwellwert für die Aktivierung der Warneinrichtung genutzt werden. Damit wird dann angezeigt, dass entweder der Kompressor ausgetauscht oder die entsprechenden Verschleißteile ausgewechselt werden müssen. Auch kann es erforderlich bzw. sinnvoll sein, Teile der Luftleitung zwischen Kompressor und Mehrkreisschutzventil auszutauschen, wenn Koksablagerungen den Durchgangsquerschnitt in diesen Leitungen verringert haben.

Als Grenzwert für die Aktivierung der Warneinrichtung kann auch ein Grenzwert des Verhältnisses der Druckverläufe während der Regenerationsphase festgelegt werden. Dieser Grenzwert kann sich von dem Grenzwert bezüglich des Druckanstieges während der Lastlaufphase durchaus unterscheiden, so dass zwei unterschiedliche Grenzwerte und möglicherweise auch zwei unterschiedliche Warneinrichtungen aktiviert werden können.

### KURZBESCHREIBUNG DER FIGUREN

Im Folgenden wird die Erfindung anhand in den Figuren dargestellter bevorzugter Ausführungsbeispiele weiter erläutert und beschrieben.
- Fig. 1: zeigt ein Schaubild zur Verdeutlichung der wesentlichen Elemente der Druckluftaufbereitungseinrichtung,
- Fig. 2: zeigt ein Schaubild mit den Elementen der Kraftfahrzeugdruckluftanlage und
- Fig. 3: zeigt ein Schaubild zur Verdeutlichung der einzelnen Steuerschritte des Verfahrens.

### FIGURENBESCHREIBUNG

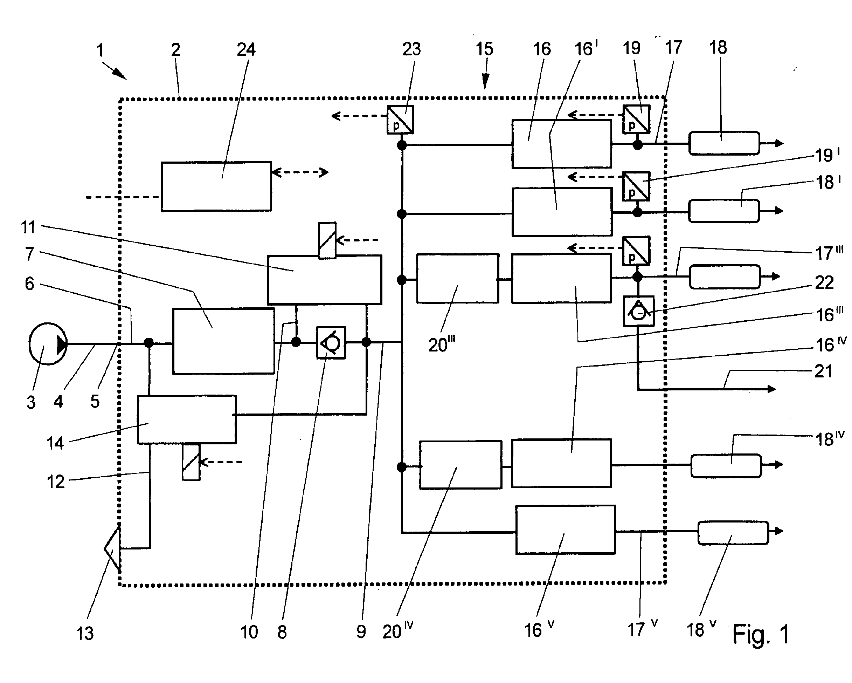

Fig. 1 zeigt in schematischer Weise die Elemente einer Druckluftaufbereitungseinrichtung 1 einer Kraftfahrzeugdruckluftanlage. Die Druckluftaufbereitungseinrichtung 1 besitzt ein schematisch angedeutetes Gehäuse 2, zu dem eine von einem Kompressor 3 ausgehende Leitung 4 herangeführt ist. Am Gehäuse 2 ist ein Anschluss 5 für die Leitung 4 vorgesehen. Von dort führt eine Leitung 6 über einen Lufttrockner 7 und weiter über ein Rückschlagventil 8 zu einer Zentralbelüftung 9, über die sämtliche Kreise der Kraftfahrzeugdruckluftanlage mit Druckluft versorgt werden. Das Rückschlagventil 8 ist von einer Umgehungsleitung 10 überbrückt, in der ein Regenerationsventil 11 angeordnet ist, welches der Einleitung der Regenerationsphase dient und die Entfernung von Feuchtigkeit aus der Kartusche des Lufttrockners 7 bewirkt. Stromauf des Lufttrockners 7 zweigt eine Auslassleitung 12 ab, die zu einer Entlüftungsöffnung 13 am Gehäuse 2 führt. In der Auslassleitung 12 ist als wesentlicher Bestandteil eines Druckreglers ein Auslassventil 14 vorgesehen. Das Regenerationsventil 11 wie auch das Auslassventil 14 sind als elektrisch ansteuerbare Magnetventile ausgebildet. Das Auslassventil 14 kann als Relaisventil ausgebildet sein und erhält seine Druckluftversorgung aus der Zentralbelüftung 9.

Die Zentralbelüftung 9 führt zu einem Mehrkreisschutzventil 15 mit einzelnen Überströmventilen 16 mit begrenzter Rückströmung, die jeweils der Versorgung eines Kreises zugeordnet sind. An das Überströmventil 16 des ersten Kreises ist über eine Leitung 17 ein Vorratsbehälter 18 angeschlossen, der der Versorgung der der Vorderachse des Fahrzeugs zugeordneten Betriebsbremse dient. In der Leitung 17, also nach dem Überströmventil 16, ist ein Druck/Spannungswandler 19 vorgesehen, der der Erfassung des Druckes in der Leitung 17 bzw. im Vorratsbehälter 18 dient.

Die Elemente des Kreises II, der der Versorgung des Teils der Betriebsbremskreise dient, der der Hinterachse des Fahrzeugs zugeordnet ist, ist einmal gestrichen. Damit führt von dem betreffenden Überströmventil 16' die Leitung 17' zum Vorratsbehälter 18'. Entsprechendes gilt für den Kreis III, der der Anhängerversorgung zugeordnet ist. Dem Überströmventil 16"' ist ein Druckminderer 20'" vorgeordnet. Von der Leitung 17"' zweigt eine Leitung 21 ab, in der ein Rückschlagventil 22 vorgesehen ist. Die Leitung 21 führt zu entsprechenden Federspeicherbremszylindern.

Auch der Kreis IV, der der Versorgung von Nebenverbrauchern dient, ist mit einem Druckminderer 20^{IV} versehen. Der fünfte Kreis weist keinen geminderten Druck auf, sondern dient der Versorgung einer Luftfederanlage. Es versteht sich, dass die Aufteilung der Aufgaben der einzelnen Kreise auch in anderer Weise festgelegt werden kann.

Ein Druck/Spannungswandler 23 erfasst den Druck in der Zentralbelüftung 9. Die Druckluftaufbereitungseinrichtung 1 weist eine Steuerelektronik 24 auf, die mit einer Leitung für einen CAN-Bus verbunden ist, und damit im Datenaustausch mit anderen Einheiten des Kraftfahrzeugs steht, z. B. mit einer Motorsteuerung, einer Getriebesteuerung usw.. Elektrische Anschluss- und Steuerleitungen sind strichpunktiert verdeutlicht.

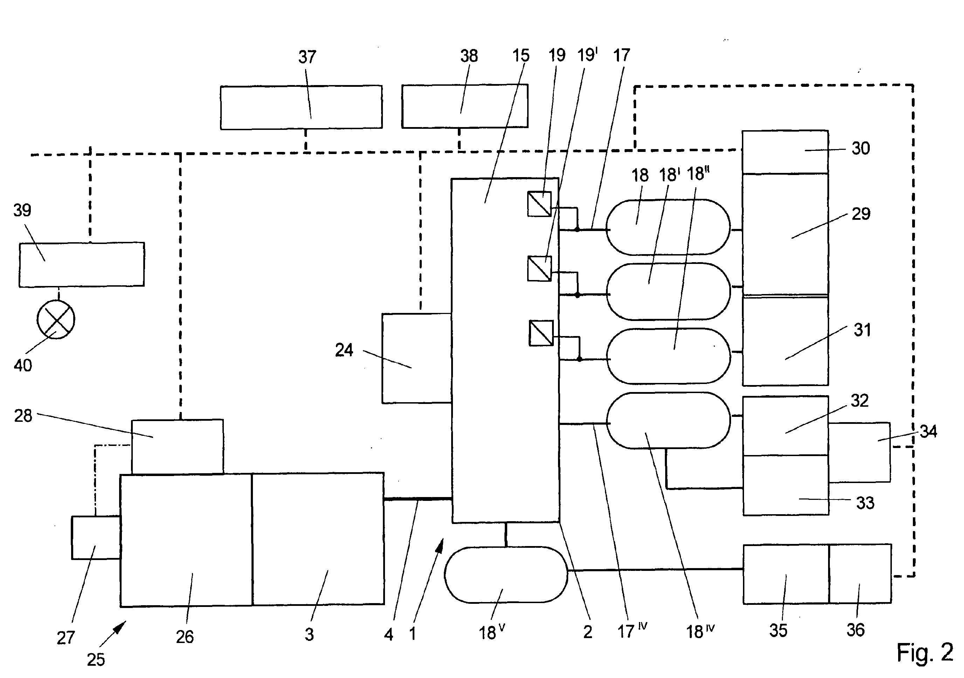

**Fig. 2** zeigt mehrere Elemente der Druckluftanlage 25, also einschließlich der Druckluftaufbereitungseinrichtung 1 mit deren Elementen. Der Kompressor 3 wird in bekannter Weise über einen Motor 26 angetrieben. Der Motor 26 ist mit einem Drehzahlgeber 27 ausgerüstet, dessen Signale einer Motorelektronik 28 zugeleitet werden.

Die an die Vorratsbehälter 18 und 18' angeschlossene Betriebsbremse verfügt über einen Signalgeber 29, dessen Signale einer EBS-Elektronik 30 zugeführt werden. Auch die an den Vorratsbehälter 18" angeschlossene Handbremse verfügt über einen Signalgeber 31, dessen Ausgangssignale der EBS-Elektronik 30 zugeführt werden.

Entsprechend ist ein Signalgeber 32 an das Getriebe des Fahrzeugs sowie ein Signalgeber 33 an der Kupplung vorgesehen. Deren Signale werden einer Steuerelektronik 34 zugeführt. Auch der Kreis V verfügt über einen Signalgeber 35 sowie eine nachgeschaltete Steuerelektronik 36.

Das Fahrzeug verfügt weiterhin über einen Signalgeber 37 für die Fahrzeuggeschwindigkeit sowie einen Signalgeber 38 für den Kilometerstand. Innerhalb der Fahrzeuginstrumentierung 39 ist eine Warneinrichtung 40 vorgesehen, die als Warnlampe oder auch als Einrichtung zur Abgabe eines akustischen Signals ausgebildet sein kann. In gestrichelter Linienführung ist verdeutlicht, wie die elektrische Verbindung eines CAN-Busses und die entsprechende Stromversorgung zwischen den einzelnen Elementen ausgebildet sind. Insoweit ist die Steuerelektronik 24, die Motorelektronik 28, die Steuerelektroniken 34 und 36 sowie die EBS-Elektronik 30 auch mit den entsprechenden Signalgebern 29, 31, 32, 33, 35, 37 und 38 sowie der Fahrzeuginstrumentierung 39 verbunden.

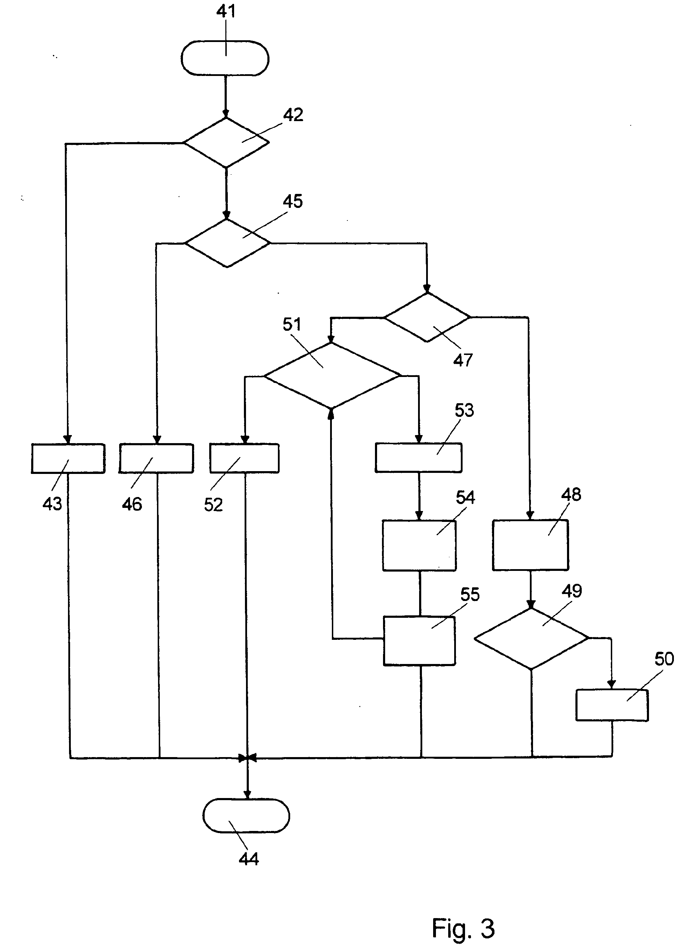

**Fig. 3** verdeutlicht den Ablauf der einzelnen Verfahrensschritte zum Steuern der Druckluftaufbereitungseinrichtung:

Der Schritt 41 symbolisiert den Start bzw. den Beginn eines Steuerzyklus. Im Schritt 42 wird abgefragt, ob der Kompressor 3 bzw. der Motor 26 läuft. Dies geschieht über die Abfrage des Signals des Drehzahlgebers 27. Steht der Motor, so dass die Abfrage mit nein beantwortet wird, wird im Schritt 43 das Regenerationsventil 11 ausgeschaltet. Damit ergibt sich das Ende im Schritt 44.

Läuft dagegen der Motor 26 mit dem angeschlossenen Kompressor 3, dann wird der Schritt 42 mit ja beantwortet und es wird in einem Schritt 45 abgefragt, ob eine Erstbefüllung beendet ist oder nicht. Liegt die Erstbefüllung der Betriebsbremskreise I und II nicht vor, wird im Schritt 46 das Regenerationsventil 11 ausgeschaltet. Ist dagegen die Erstbefüllung beendet, so folgt der Schritt 47, mit welchem abgefragt wird, ob sich der Druckregler mit dem Auslassventil 14 in der Lastlaufphase oder in der Leerlaufphase befindet. Befindet sich der Druckregler in der Lastlaufphase, so kann keine Regeneration erfolgen und es werden gemäß Schritt 48 ein oder mehrere Fördervolumina während einer oder mehrerer Lastlaufphasen ohne zwischenzeitlich erfolgte Regeneration aufaddiert. In der Steuerelektronik 24 wird in einem Speicher ein Konto geführt, welches die aufaddierten Fördervolumina enthält bzw. wiedergibt. Die aufaddierten Fördervolumina werden mit einem an der Steuerelektronik 24 eingestellten (programmierbar) maximalen Fördervolumen verglichen. Wenn gemäß Schritt 49 das an der Steuerelektronik 24 eingestellte maximale Fördervolumen ohne erfolgte Regeneration nach abgeschlossener Erstbefüllung überschritten ist, erfolgt im Schritt 50 die Fahrerinformation über die Aktivierung der Warneinrichtung 40. Ist dagegen das maximale Fördervolumen nicht überschritten, so wird der Zyklus gemäß Schritt 44 beendet.

Sofern gemäß Schritt 47 festgestellt wird, dass sich der Druckregler in der Leerlaufphase befindet, folgt Schritt 51 nach, in welchem abgefragt wird, welchen Betrag ein Regenerationskonto zeigt. Das Regenerationskonto wird in einem Speicher in der Steuerelektronik 24 geführt und gibt eine Regenerationsdauer (Zeitspanne) an, die aufgrund und proportional zu den Fördervolumina in dem Konto festgelegt wird und die erforderlich wäre, den Lufttrockner 7 ausreichend zu regenerieren. Wenn das Regenerationskonto < 0 ist, bleibt in einem Schritt 52 das Regenerationsventil 11 ausgeschaltet, weil eine Regeneration nicht erforderlich ist. Zeigt dagegen das Regenerationskonto einen positiven Wert, dann wird in einem Schritt 53 ein Signal auf das Regenerationsventil 11 gegeben, womit ein Regenerationszyklus eingeleitet wird. Es besteht die Möglichkeit, in einem Schritt 54 die aufaddierten Fördervolumina gemäß der Regenerationsdauer (Zeitspanne) zurückzusetzen und in einem Schritt 55 das Regenerationskonto entsprechend der Regenerationsdauer (Zeitspanne) zurückzusetzen. Insoweit läuft jetzt eine Regenerationsphase ab und das Konto und das Regenerationskonto werden abgebaut. Bei vollständiger Regeneration zeigen beide Konten die Werte 0 Volumen und 0 Zeit.

Wenn nun während einer Regenerationsphase infolge eines Druckluftverbrauches die Regenerationsphase unterbrochen und eine Lastlaufphase erforderlich wird, zeigen das Konto der Fördervolumina und das Regenerationskonto Restbeträge, die während einer nachfolgenden Regenerationsphase mit berücksichtigt werden.

Die Ermittlung der Fördervolumina geschieht in der Steuerelektronik 24. Es wird das konstruktive Volumen eines Förderhubes des Kompressors 3 in die Steuerelektronik 24 eingegeben. Die Signale des Drehzahlgebers 27 ermöglichen es der Steuerelektronik 24, die Fördervolumina zu berechnen und in dem beschriebenen Konto aufzuaddieren bzw. abzuspeichern.

Mit Hilfe des Druck/Spannungswandlers 23 wird der Druckverlauf in der Zentralbelüftung 9 nach dem Rückschlagventil 8 überwacht. Die dem jeweiligen Druck entsprechenden Spannungssignale werden unter Zuordnung einer Zeitachse in einem Speicher abgelegt. Unter Auswahl bzw. Festlegung einer Zeitdifferenz (Zeiteinheit) wird eine Druckdifferenz pro dieser Zeiteinheit gebildet und in der Steuerelektronik 24 abgespeichert. Dies geschieht einmal im Neuzustand der Druckluftaufbereitungseinrichtung und dann in regelmäßigen zeitlichen Abständen über die Lebensdauer der Druckluftaufbereitungseinrichtung.

Es wird das Verhältnis der Druckdifferenzen zu verschiedenen Zeitpunkten der Lebensdauer gebildet. So entsteht ein Korrekturwert. Dieser Korrekturwert wird sich über die Lebensdauer infolge eintretenden Verschleißes und sonstiger Veränderungen auch verändern. Mit dem jeweiligen Korrekturwert wird das jeweils ermittelte Fördervolumen korrigiert, so dass in dem Konto des Speichers in der Steuerelektronik 24 genauere Fördervolumina aufaddiert werden.

Der jeweilige Korrekturwert wird auch zur Korrekturwert wird auch zur Korrektur der Zeitwerte des Regenerationskontos für die Regenerationsphasen benutzt und damit letztlich die Regenerationsluftmenge korrigiert.

### BEZUGSZEICHENLISTE

- 1: Druckluftaufbereitungseinrichtung
- 2: Gehäuse
- 3: Kompressor
- 4: Leitung
- 5: Anschluss
- 6: Leitung
- 7: Lufttrockner
- 8: Rückschlagventil
- 9: Zentralbelüftung
- 10: Umgehungsleitung

- 11: Regenerationsventil
- 12: Auslassleitung
- 13: Entlüftungsöffnung
- 14: Auslassventil
- 15: Mehrkreisschutzventil
- 16: Überströmventil
- 17: Leitung
- 18: Vorratsbehälter
- 19: Druck/Spannungswandler
- 20: Druckminderer

- 21: Leitung
- 22: Rückschlagventil
- 23: Druck/Spannungswandler
- 24: Steuerelektronik
- 25: Druckluftanlage
- 26: Motor
- 27: Drehzahlgeber
- 28: Motorelektronik
- 29: Signalgeber
- 30: EBS-Elektronik

- 31: Signalgeber
- 32: Signalgeber
- 33: Signalgeber
- 34: Steuerelektronik
- 35: Signalgeber
- 36: Steuerelektronik
- 37: Signalgeber
- 38: Signalgeber
- 39: Fahrzeuginstrumentierung
- 40: Warneinrichtung

- 41: Schritt
- 42: Schritt
- 43: Schritt
- 44: Schritt
- 45: Schritt
- 46: Schritt
- 47: Schritt
- 48: Schritt

- 49: Schritt
- 50: Schritt
- 51: Schritt
- 52: Schritt
- 53: Schritt
- 54: Schritt
- 55: Schritt

## Patentansprüche

1. Verfahren zum Steuern einer Druckluftaufbereitungseinrichtung (1) für Kraftfahrzeug-Druckluftanlagen (2), mit einem Motor (26), einem Kompressor (3), einer Steuerelektronik (24), einem Lufttrockner (7), einem Druckregler mit Auslassventil (14) zur Steuerung des Kompressors (3) zwischen einer Leerlaufphase und einer Lastlaufphase, einem Mehrkreisschutzventil (15) mit Überströmventilen (16, 16' usw.) für die einzelnen Kreise (I, II usw.), und einem Regenerationsventil (11), indem die während der Lastlaufphase geförderte Luftmenge mit der Steuerelektronik (24) ermittelt und eine dazu proportionale Regenerationsluftmenge festgelegt und die Regeneration mit der festgelegten Regenerationsluftmenge durchgeführt wird, wobei bei Überschreiten eines festgelegten Grenzwertes eine Warneinrichtung (40) aktiviert wird, **dadurch gekennzeichnet, dass** im Neuzustand der Druckluftaufbereitungseinrichtung (1) sowie in mindestens einem zeitlichen Abstand über die Lebensdauer der Druckluftaufbereitungseinrichtung der Druckverlauf in der Zentralbelüftung (9) nach dem Rückschlagventil (8) während der Lastlaufphase und/oder während der Regenerationsphase überwacht und die jeweilige Druckdifferenz pro Zeiteinheit abgespeichert wird, dass das Verhältnis der jeweiligen Druckdifferenzen pro Zeiteinheit gebildet und die Ermittlung der während der Lastlaufphase geförderten Luftmenge, die in dem zeitlichen Abstand durchgeführt wird, und/oder die Regenerationsluftmenge mit diesem Verhältnis korrigiert wird.

2. Verfahren nach Anspruch 1, **dadurch gekennzeichnet, dass** der Druckverlauf in der Zentralbelüftung (9) nach dem Rückschlagventil (8) bzw. im Vorratsbehälter (18, 18') der Betriebsbremse ausgehend von einem festgelegten Anfangsdruck (P₁) überwacht wird.

3. Verfahren nach Anspruch 2, **dadurch gekennzeichnet, dass** ein Anfangsdruck (p₁) von etwa 5 bar bei Überwachung des Druckanstiegs während der Lastlaufphase eingesetzt wird.

4. Verfahren nach Anspruch 2, **dadurch gekennzeichnet, dass** ein Anfangsdruck (p₁) von etwa 12 bar bei Überwachung des Druckabfalls während der Regenerationsphase eingesetzt wird.

5. Verfahren nach mindestens einem der Ansprüche 1 bis 3, **dadurch gekennzeichnet, dass** die Überwachung des Druckverlaufs bei eingelegter Handbremse und während der bevorzugten Befüllung der Betriebsbremskreise (1, II) durchgeführt wird.

6. Verfahren nach mindestens einem der Ansprüche 1 bis 5, **dadurch gekennzeichnet, dass** die Überwachung des Druckverlaufs bei Stillstand des Fahrzeugs und in Zeiten ohne Luftverbrauch durchgeführt wird.

7. Verfahren nach mindestens einem der Ansprüche 1 bis 6, **dadurch gekennzeichnet, dass** die Überwachung der Regeneration nach Beendigung der Lastlaufphase erfolgt.

8. Verfahren nach mindestens einem der Ansprüche 1 bis 7, **dadurch gekennzeichnet, dass** als Grenzwert für die Aktivierung der Warneinrichtung (40) ein Grenzwert des Verhältnisses der Druckverläufe während der Lastlaufphase festgelegt wird.

9. Verfahren nach mindestens einem der Ansprüche 1 bis 7, **dadurch gekennzeichnet, dass** als Grenzwert für die Aktivierung der Warneinrichtung (40) ein Grenzwert des Verhältnisses der Druckverläufe während der Regenerationsphase festgelegt wird.

## Claims

1. A method for controlling a compressed air processing device (1) for vehicle air systems (2), including a motor (26), a compressor (3), an electronic control unit (24), an air drier (7), a pressure regulator with outlet valve (14) to switch the compressor (3) between a phase running without load and a phase running with load, a multi circuit protection valve(15) with overflow valves (16, 16' etc.) for the circuits (I, II etc.) each, and a regeneration valve (11), by detecting the quantity of air conveyed during the phase running with load by use of the electronic control unit (24), and determining a proportional quantity of regeneration air, and conducting the regeneration with the determined quantity of regeneration air, while during surpassing a fixed limit a warning apparatus (40) is activated, **characterized in that** at a time the compressed air processing device (1) Is new and at a time later at least once during the lifetime of the compressed air processing device (1) the march of pressure of the compressed air providing conduit (9) downstream the check valve (8) Is watched during the phase running with load and/or the regeneration phase and the respective difference of the pressure per time unit is stored, **in that** the ratio of the respective differences per time unit Is formed and the detecting of the quantity of air conveyed during the phase running with load, conducted at the time later, and/or the quantity of regeneration air Is corrected with this ratio.

2. The method of claim 1, **characterized in that** the march of pressure of the compressed air providing conduit (9) downstream the check valve (8) or In the air reservoir (18, 18') of the service brake respectively is watched starting from a fixed first pressure (p₁).

3. The method of claim 2, **characterized in that** a first pressure (p₁) of about 5 bars is taken during watching the rise of pressure of the phase running with load.

4. The method of claim 2, **characterized in that** a first pressure (p₁) of about 12 bars is taken during watching the decrease of pressure of the regeneration phase.

5. The method of at least one of the claims 1 to 3, **characterized in that** the watching of the march of pressure Is conducted during the hand brake being active and during the preferred filling of the service brake conduits (I, II).

6. The method of at least one of the claims 1 to 5, **characterized in that** the watching of the march of pressure is conducted during standstill of the vehicle and during times without compressed air consumption.

7. The method of at least one of the claims 1 to 6, **characterized in that** the watching of the regeneration is conducted after finishing the phase running with load.

8. The method of at least one of the claims 1 to 7, **characterized in that** a limit of the ratio of the marches of pressures during the phase running with load is fixed as the limit for activating the warning apparatus (40).

9. The method of at least one of the claims 1 to 7, **characterized in that** a limit of the ratio of the marches of pressures during the regeneration phase is fixed as the limit for activating the warning apparatus (40).

## Revendications

1. Procédé de commande d'un dispositif de traitement d'air comprimé (1) pour des installations à air comprimé (2)) de véhicules automobiles, comportant un moteur (26), un compresseur (3), une électronique de commande (24), un sécheur d'air (7), un régulateur de pression avec une soupape d'échappement (14) pour la commande du compresseur (3) entre une phase à vide et une phase en charge, une soupape de sécurité à plusieurs circuits (15) avec des soupapes de décharge (16, 16', etc.) pour les différents circuits (1, II, etc.), et une soupape de régénération (11), dans lequel le volume d'air transporté pendant la phase en charge est déterminé par l'électronique de commande (24) et un volume d'air de régénération, proportionnel à celui-ci, est défini et la régénération est effectuée avec le volume d'air de régénération défini, un dispositif d'alarme (40) étant activé lorsque la valeur est supérieure à une valeur limite définie, **caractérisé en ce que**, à l'état neuf du dispositif de traitement d'air comprimé (1) et au moins dans un intervalle de temps pendant la durée de vie du dispositif de traitement d'air comprimé (1), l'évolution de la pression dans le système de ventilation central (9) en aval du clapet de non-retour (8) est surveillée pendant la phase en charge et/ou pendant la phase de régénération et la différence de pression respective par unité de temps est mémorisée, **en ce que** le rapport entre les différences de pression respectives par unité de temps est formé et la détermination du volume d'air transporté pendant la phase en charge, laquelle est effectuée dans l'intervalle de temps, et/ou le volume d'air de régénération sont corrigés avec ce rapport.

2. Procédé selon la revendication 1, **caractérisé en ce que** l'évolution de la pression dans le système de ventilation central (9) en aval du clapet de norl-retour (8) ou dans le réservoir de stockage (18, 18') du frein de service est surveillée à partir d'une pression initiale (p₁) définie.

3. Procédé selon la revendication 2, **caractérisé en ce qu'**une pression initiale (p₁) de 5 bars environ est utilisée lors de la surveillance de l'augmentation de pression pendant la phase en charge.

4. Procédé selon la revendication 2, **caractérisé en ce qu'**une pression initiale (p₁) de 12 bars environ est utilisée lors de la surveillance de la chute de pression pendant la phase de régénération.

5. Procédé selon l'une quelconque des revendications 1 3, **caractérisé en ce que** la surveillance de l'évolution de la pression est effectuée lorsque le frein à main est serré et pendant le remplissage préféré des circuits de frein de service (I, II).

6. Procédé selon l'une quelconque des revendications 1 à 5, **caractérisé en ce que** la surveillance de l'évolution de la pression est effectuée lorsque le véhicule est à l'arrêt et dans les intervalles de temps sans consommation d'air.

7. Procédé selon l'une quelconque des revendications 1 à 6, **caractérisé en ce que** la régénération est surveillée à la fin de la phase en charge.

8. Procédé selon l'une quelconque des revendications 1 à 7, **caractérisé en ce que**, pour la valeur limite pour l'activation du dispositif d'alarme (40), il est défini une valeur limite du rapport des évolutions de pression pendant la phase en charge.

9. Procédé selon l'une quelconque des revendications 1 à 7, **caractérisé en ce que**, pour la valeur limite pour l'activation du dispositif d'alarme (40), il est défini une valeur limite du rapport des évolutions de pression pendant la phase de régénération.
